# EUROPEAN PATENT SPECIFICATION

(11) **EP 2 962 550 B1**
(45) Date of publication and mention of the grant of the patent: **18.11.2020**
(21) Application number: 15397530.5
(22) Date of filing: 17.06.2015
(51) Int. Cl.: A01G 23/00, G01G 3/14, G01G 19/08

(54) **A TRANSPORT DEVICE COMPRISING A STRAIN SENSOR**
TRANSPORTVORRICHTUNG MIT DEHNUNGSSENSOR
DISPOSITIF DE TRANSPORT COMPRENANT UN CAPTEUR DE DÉFORMATION

(30) Priority: 03.07.2014 FI 20145648
(43) Date of publication of application: 06.01.2016
(73) Proprietor: John Deere Forestry Oy, 33100 Tampere (FI)
(72) Inventor: HÄMÄLÄINEN, Reijo, 33840 TAMPERE (FI); JÄMSÄ, Jouni, 33100 TAMPERE (FI); PAAKKINEN, Marko, 33230 TAMPERE (FI)
(74) Representative: Berggren Oy, Tampere

(56) References cited:
- EP-A2- 2 629 069
- WO-A1-2005/119188
- WO-A1-2006/072667
- US-A- 4 020 911
- US-A- 6 118 083
- US-A1- 2007 181 350
- US-A1- 2012 209 502

## Description

### Field of the invention

The invention relates to transport devices, such as load carrying equipment to be driven on the ground, and/or trailers for them. In particular, the invention relates to an arrangement for measuring the load in such a transport device. The invention relates particularly to a forwarder that comprises means which make it possible to - and advantageously also do - measure the quantity, such as the mass, of the load of the forwarder.

### Background of the invention

Transport devices, such as load carrying equipment, are used for transporting loads. For the machine as such, a maximum payload quantity may be determined for reasons relating to the structure. Exceeding the maximum quantity will increase the risk of damaging the machine. Some load carrying equipment, particularly forest machines, such as forwarders, as intended herein, are driven on grounds of variable types, such as forest roads, or forest land, such as sandy soil and/or peatland. The maximum load can then be limited by not only the load carrying capacity of the transport device but also the load carrying capacity of the ground, such as forest land. If the load carrying capacity of the forest land is exceeded, the loaded forwarder may sink into the ground. Often, a visual assessment of the load quantity does not meet the precision requirements for the efficient use of the equipment.

Solutions are known from EP2629069 in which a measurement sensor is integrated in a bogie of the load carrying equipment, whereby the mass of the load can be measured during loading of the machine. Such solutions often have poor mechanical reliability, particularly with respect to the wiring needed. Moreover, the movement of the bogie during the use causes significant variation in the measurement signal, making it difficult to use the measurement signal. Furthermore, the measurement result obtained from only one bogie may significantly depend on the conditions of use, such as the steepness of the ground or the ambient temperature. Besides, a scale arranged in a loader is known, for determining the increase in the load caused each time the loader is used. With such an arrangement, however, it is not possible to measure the total mass in a single step.

### Brief summary of the invention

It has been found that some of the above described problems can be reduced by placing a strain sensor, for measuring the quantity of the load, in a suitable location in the transport device. The suitable location is, for example,
- in or on a transverse axle of the transport device, and/or
- fixed in relation to the frame of the transport device or fastened to said frame in a stationary manner, and/or
- in a shielded location enclosed by the frame of the transport device.

Furthermore, the accuracy of measurement can be improved, for example,
- by providing at least one strain sensor on each side of the plane determined by the centre line in the longitudinal direction of the transport device and the normal of the ground of the transport device; and/or
- by compensating for the effect of temperature by means such as a compensating strain sensor or a temperature sensor, for compensating for a deviation caused by the operating temperature; and/or
- by providing the transport device with a tilt angle sensor for measuring the tilt angle of the transport device, and by using the tilt angle for making the measurement result more accurate.

In an embodiment, the transport device is, unloaded and loaded, configured to travel in its longitudinal direction on the ground. This transport device comprises
- a frame extending in said longitudinal direction,
- a transverse axle that is perpendicular to said longitudinal direction, and
- a first strain sensor provided in or on said transverse axle, in a location which
   • is fixed in relation to said frame or fastened to said frame in a stationary manner, and
   • is above or below the centre line of the transverse axle;
   wherein said first strain sensor is configured to measure the strain of said transverse axle in said location, and the quantity of the load of the transport device can be calculated on the basis of a signal or response by the first strain sensor.

The invention is disclosed in claim 1.

### Description of the drawings

In the following, the invention will be described in more detail with reference to the appended drawings, in which
- Fig. 1: shows a forwarder, i.e. a transport device, in a side view;
- Fig. 2: shows the frame, the transverse axle, and a bogie connected to the transverse axle, of a transport device in a perspective view seen obliquely from below, the figure showing part of a forwarder;
- Fig. 3: shows the placement of a strain sensor underneath the transverse axle, seen from the end of the transverse axle; and
- Fig. 4: shows the frame, the transverse axles and the strain sensors of a transport device seen from below.

### Detailed description of the embodiments

In this description, a transport device refers to equipment configured to travel on the ground without a load and loaded. The transport device comprises wheels on which it is configured to travel. In some cases, a crawler track is provided on the wheels to reduce the surface pressure exerted by the transport device on the ground.

The transport device can belong to, for example, at least one of the following groups, that is, be at least one of the following:
- a load carrying machine,
- a part of a forest machine system, such as a forest machine or auxiliary equipment for it, for example a trailer for it,
- a forest machine, and
- a load carrying machine configured to be driven off-road.

As more detailed examples of the transport device, we present:
- a forwarder, *i.e.* a forest tractor designed for the transportation of timber;
- a bundling machine, *i.e.* engine powered equipment for the bundling of logs or pulpwood;
- a skidder, *i.e.* a tractor equipped with skidding grapples or corresponding means for pulling timber;
- a tractor excavator, *i.e.* a tractor equipped with excavation apparatus;
- a combine harvester, *i.e.* a machine for harvesting grain crops and threshing the grain from straw and chaff;
- a dumper, *i.e.* a truck equipped with a load skip in front; and
- a trailer for a vehicle, particularly a trailer for any of the vehicles mentioned above.

In the following, the invention will be described in more detail for a case in which the transport device is a forwarder. The design principles to be presented can also be applied in the other transport devices presented above. In particular, the design principles to be presented can be applied in such transport devices in which the solution to be presented is possible in view of the rest of the structure.

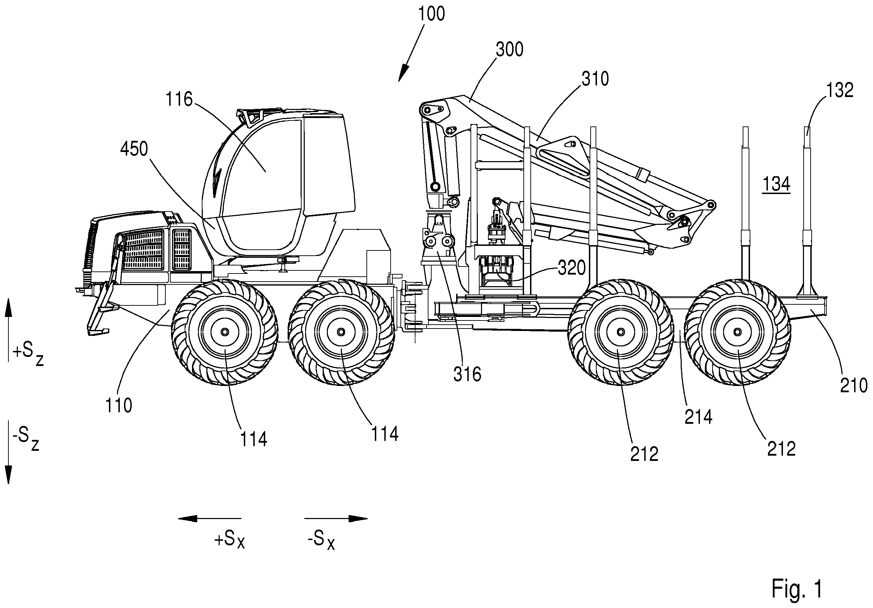

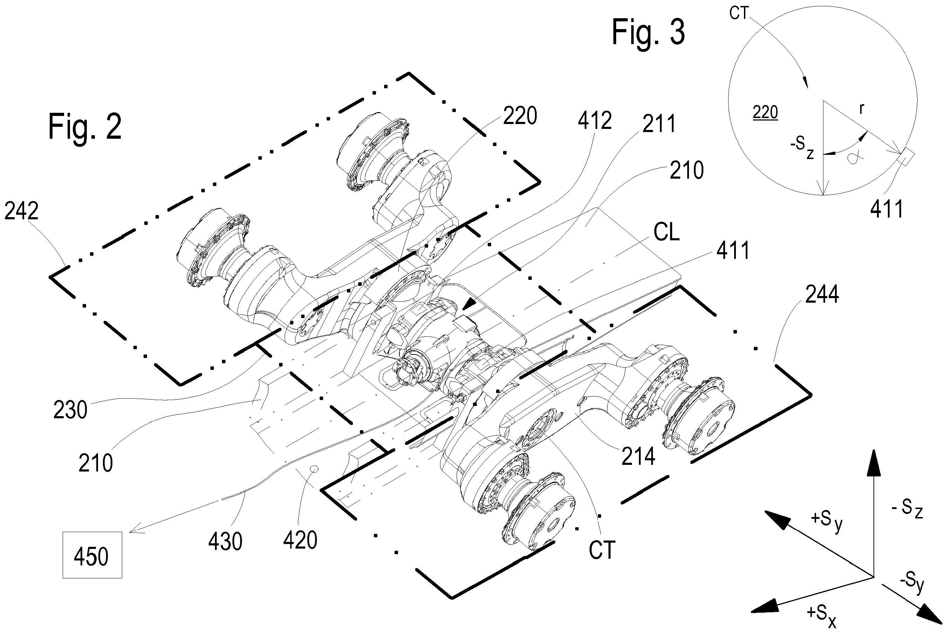

Figure 1 shows a transport device 100. The transport device of Fig. 1 is a load carrying machine 100, more precisely a forwarder 100. In general, the transport device is configured to carry a load. In particular, the transport device is configured to travel without a load (*i.e.* empty) and loaded on a ground, such as soil. In one of its longitudinal directions, the transport device is arranged to be supported by wheels, optionally also by a crawler track, and to travel forward (in a direction +Sx) and normally also backward (in a direction -Sx) opposite to the longitudinal direction. Transport devices equipped with a crawler track also comprise wheels so that the crawler track is left between the ground surface and the wheel. The above presented travel direction determines the longitudinal direction +Sx of the transport device as described above. Further, the transport device comprises a transverse axle 220 (Fig. 2). The longitudinal direction of the transverse axle is the direction Sy which forms an angle with the direction Sx. Typically, this angle is straight. Both directions, Sx and Sy, are parallel to the ground of the transport device, such as the soil surface. The ground of the transport device refers to the surface on which the transport device stands or moves.

In Fig. 1 and hereinbelow, the direction Sz refers to a direction perpendicular to the directions Sx and Sy. In this description, the directions +Sx, +Sy and +Sz are mutually oriented so that +Sz extends in the direction of the cross product of the directions +Sx and +Sy. If the directions +Sx and +Sy are perpendicular to each other, the directions +Sx, +Sy and +Sz are mutually directed according to a conventional right-handed coordinate system. Furthermore, when the ground of the transport device is horizontal, the direction +Sz is vertical and extends upwards (see Fig. 1). Hereinbelow, the direction Sz will be called the vertical direction, wherein the respective use situation is the assumed use on a horizontal ground. If this is not the case, the direction Sz will refer, as described above, to the normal of the surface of the ground of the transport device 100, extending from the ground towards the transport device. Naturally, single parts of the transport device 100 can be placed in any position during the manufacture.

The forwarder 100 comprises a front frame 110 and a rear frame 210. The front frame 110 comprises a motor, front wheels 114 and a cabin 116. The rear frame 210 is configured to be movable by means of a rear bogie 214. The rear bogie 214 comprises rear wheels 212. The rear frame 210 is equipped with vertical supports 132, whereby said rear frame 210 and the vertical supports 132 delimit a load space 134.

Further, the forwarder 100 comprises means 300 for loading and unloading the load space 134. In the case of the forwarder, these means 300, that is, the loading means 300, comprise e.g. a crane arrangement 310 and a loading grapple 320. By means of a support 316, the crane arrangement 310 is mounted on the rear frame 210 in a swivelled manner. Advantageously, the transport device comprises means 300 for loading and unloading, because particularly in such transport devices, it is necessary to determine the load quantity to secure the efficient use of the equipment.

The forwarder 100 is configured to transport a load in the load space 134. Typically, a maximum load quantity is determined that can be carried by the forwarder 100, depending firstly on the strength of the forwarder and secondly on the load-bearing capacity of the ground, such as forest soil. For example for these reasons, it is advantageous to measure the load quantity.

It has been found that the load quantity can be measured by a strain sensor 411, 412, 413, 414, at least by a first strain gauge 411. The strain sensor can be used for measuring the elongation of the structure at the point where the sensor is installed. As is well known, tension and elongation are interdependent according to Hooke's law. Moreover, this tension is caused by the weight of the load on the transport device and of the transport device itself. Consequently, the load quantity can be measured from the elongation of the structure.

It has been found to be advantageous to provide a first strain sensor 411 at a point in the transport device 100 that is fixed in relation to the frame of the transport device 100, such as the rear frame 210 of the forwarder, or is fastened to said frame in a stationary manner. This gives the advantage of minimizing short-term variations in the loading. Thus, the signal or response to be measured is more equable with respect to time than a signal or response measured at other points.

In Fig. 2, reference numeral 230 indicates an area that is fixed in relation to the frame 210 of the transport device 100. In particular, no movable joint, such as an articulation or bearing, is left between the frame 210 and any point in such an area 230. A first strain sensor 411 is provided at such a point of the transport device 100 that no movable joint, such as an articulation or bearing, is left between the frame 210 and said point.

Correspondingly, reference numeral 242 in Fig. 2 indicates a first area which is configured to be movable with respect to the frame. Thus, between the frame 210 and all the points of such an area 242, measured along the surface of the transport device, a movable joint is left, which is a bearing in the case of Fig. 2. Correspondingly, reference numeral 244 indicates a second area which is configured to be movable with respect to the frame.

For example, the bogie 214 is configured to rock in relation to the frame 210, and as shown in Fig. 2, the bogie 214 is part of the area 244 configured to be movable. Thus, when driven on uneven ground, the bogie will rock, and the signal or response given by the strain sensor will vary significantly in time. The utilization of such a varying signal is difficult; for example, an incorrect warning for overload can be caused by a bumpy ground.

In general, the strain sensor can transmit the signal to a control unit, for example, along an electric wire 430 or wirelessly. On the other hand, such a signal from the strain sensor can be a response to input; for example, the signal can be a voltage response to input current, in the case of measuring a voltage caused by a known current. Hereinbelow, in connection with the sensor, the term "signal" can alternatively refer to the response of said sensor to an input.

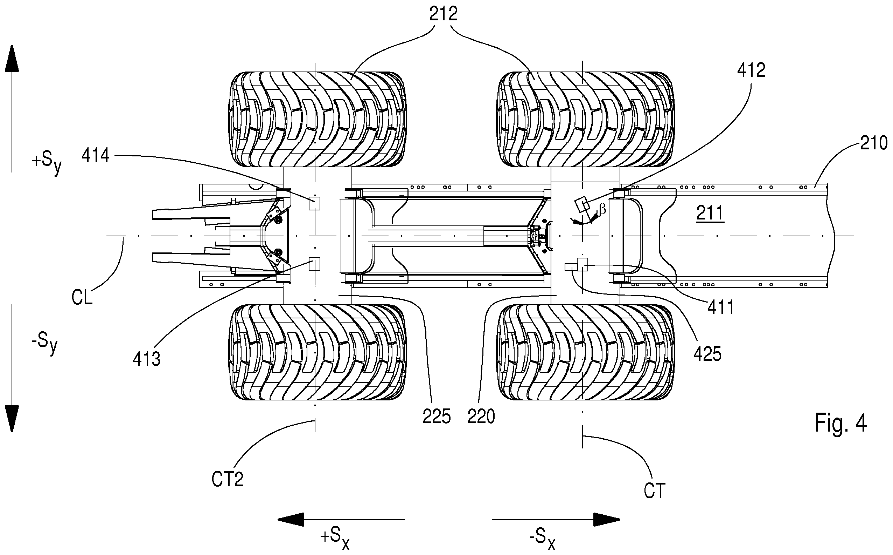

With reference to Figs. 2 and 4, the transport device 100, such as a forwarder, the frame 210, such as the rear frame 210, encloses a shielded space 211 extending in the longitudinal direction of the transport device 100. Thus, the first strain sensor 411 is arranged in said shielded space 211, at a point that is fixed in relation to said frame or fastened to said frame in a stationary manner. Thus, the strain sensor is protected from external mechanical stresses, such as impacts. Also, a tilt angle sensor 420 to be presented below can be arranged in such a shielded space 211. Also, a temperature compensation sensor 425 to be presented below is arranged in such a shielded space 211. Also, an electric wire 430 to be presented below can be arranged in such a shielded space 211.

Typically, such transport devices 100 comprise wheels 114, 212 (see Fig. 1), on which the transport device 100 is arranged to travel. Consequently, the ground supports the wheels 114, 212, and furthermore, the supporting force of the ground, such as the soil surface, is transmitted to the frame of the transport device by the wheels and their axles. It has been found that particularly the strain effective on these axles is relatively large and can thus be well measured. For utilizing this finding, a strain sensor 411 can be arranged in or on a transverse axle.

With reference to Fig. 2, in one embodiment, the transport device 100, such as the forwarder, comprises
- a frame 210, such as a rear frame 210, extending in said longitudinal direction ±Sx,
- a transverse axle 220 that is transverse to said longitudinal direction ±Sx, and
- a first strain sensor 411 arranged in or on said transverse axle 220, in a location which
   - is fixed in relation to said frame 210 or is fastened to said frame 210 in a stationary manner, and
   - is above or below the centre line CT of said transverse axle 220.

Said advantageous point can be fixed, for example if the sensor is fastened to a point welded on the frame. Said advantageous point can be fastened in a stationary manner, for example if the sensor is fastened to a point mounted on the frame by bolted joints. If the bolts are not opened, said point is stationary with respect to the frame. Thus, said point is not configured to be movable with respect to said frame 210 during use. Deformations are naturally caused by forces. Considering this, said point is movable with respect to said frame 210 merely by causing deformations in the frame and/or by opening said stationary joint or another stationary joint.

The strain sensor 411 is arranged above or below the central line CT of the transverse axle 220 This gives the advantage that the deformations directly by the side of the central line are primarily shear strains. An elongation can be detected more easily than shear strains by the strain sensor. Thus, said first strain sensor 411 is configured to measure the elongation of said transverse axle 220 in said location, and the quantity of the load of the transport device 100 can be calculated on the basis of a signal from the first strain sensor 411. The load quantity can be calculated by the control unit 450 of the transport device 100, or by a separate control unit.

Referring to Fig. 3, the strain sensor 411 is not necessarily located directly above or below the central line CT of the transverse axle 220. Advantageously, with respect to the central line CT, the strain sensor 411 is placed in a direction r which forms an angle α smaller than 45 degrees with the normal ±Sz (upwards or downwards) of the surface of the ground of the transport device; on a horizontal ground, the direction ±Sz is the vertical direction. Advantageously, this angle is smaller than 30 degrees, such as smaller than 15 degrees or smaller than 5 degrees. Thus, the elongation or compression can be easily measured. If the transport device is not on a horizontal ground, the direction ±Sz refers to the direction of the normal of the ground as described above; on a horizontal ground, the direction ±Sz refers to the vertical direction. According to normal practice, the direction r above refers to the direction of the location of the strain sensor (411 to 412) from such a point on the central line CT of the transverse axle 220 that r is perpendicular to the longitudinal direction of the central line CT.

Furthermore, it has been found that the strain formed in the transverse axle 220 is typically an elongation when below the central line CT, and a compression when above the central line CT. Typically, the signal given by the strain sensor is positive when the variable to be measured is (positive) elongation, and negative when the variable to be measured is compression (i.e. negative strain). With respect to the measurement technique, it is advantageous to read a signal that increases with the load. Thus, said strain sensor 411 (or another strain sensor 412, 413, 414 to be mentioned below) is arranged in or on the transverse axle 220, below the central line CT of this transverse axle 220.

The strain sensors are typically fastened (i) with glue or (ii) with glue and screws to the desired point. It has been found that the long-term reliability of a glue joint is typically better on the elongation side than on the compression side. Moreover, the strain sensor 411 can be maintained, for example replaced, more easily if it is arranged below the transverse axle 220. Also for these reasons, said strain sensor 411 (or another strain sensor 412, 413, 414 to be mentioned below) is arranged in or on the transverse axle 220, below the central line CT of this transverse axle 220.

Further referring to Fig. 3, the strain sensor 411, 412, 413, 414 is thus not necessarily located directly below the central line. Advantageously, the strain sensor 411 is located in such a direction r with respect to the central line CT, that forms an angle α smaller than 45 degrees with the vertically downward direction -Sz. Advantageously, this angle is smaller than 30 degrees, for example smaller than 15 degrees or smaller than 5 degrees. In such a case, the elongation can be easily measured, the joint of the strain sensor can be made reliable, and the sensor can be made easy to maintain. If the transport device is not on a horizontal ground, the direction -Sz refers to that normal of the surface of the ground which extends towards the ground. Further according to normal practice, the direction r also here refers to the direction of the location of the strain sensor (411, 412) from such a point on the central line CT of the transverse axle 220 that r is perpendicular to the longitudinal direction of the central line CT.

Furthermore, the strain sensor can be arranged at a point located on a plane determined by the normal ±Sz of the surface of the ground and the central line CL in the longitudinal direction of the transport device (with respect to the markings CL and Sz, reference is made to Fig. 2 although such locating is not shown in Fig. 2). However, it has been found that the elongations are typically smaller precisely at the longitudinal central line CL than closer to the wheel 212 or the bogie 214. Thus, the strain sensor is advantageously spaced from the plane determined by the normal ±Sz of the surface of the ground and the central line CL in the longitudinal direction of the transport device. Preferably, the strain sensor is arranged at a first distance from the plane determined by the normal ±Sz of the surface of the ground and by the central line CL in the longitudinal direction of the transport device; the strain sensor is arranged at a second distance from the point of intersection of the transverse axle 220 and the frame 210; and said second distance is smaller than said first distance. This is illustrated in Fig. 2.

With reference to Fig. 2, said first strain sensor 411 (or other strain sensor 412, 413, 414, 425 or other sensor 420) is placed in the above-mentioned shielded space 211 enclosed by the frame 210. The strain sensor 411 (or other strain sensor 412, 413, 414, 425 or other sensor 420) can be connected, for example, to an electric wire 430 for transmitting a signal from said sensor to a control unit 450. Advantageously, such an electric wire 430 also extends in said shielded space 211. Furthermore, the electric wire can be or is connected to the control unit 450.

In an embodiment, the transport device 100 comprises not only said strain sensor 411 but also a tilt angle sensor 420 for measuring the tilt angle of the transport device 100. By means of the tilt angle sensor 420 it is possible to take into account changes in the measurement result of the strain sensor 411, caused by gravitational torque effective on the load and/or on the transport device when the transport device is located on a ground that is tilted with respect to the horizontal plane, for example on a slope. In particular, if the strain sensor is on the transverse axle 220, as described above, and the transport device 100 is on a slope such that the transverse axle 220 is approximately parallel with the up or down gradient, said gravitational torque will affect the measurement results. If the transport device 100 comprises a tilt angle sensor 420, the load quantity of the transport device can be calculated on the basis of the signal from the tilt angle sensor 420 in addition to the signal from the first strain sensor 411.

The tilt angle sensor 420 can be used for making the measurements more accurate, irrespective of the point where the strain sensor 411 is arranged. In an embodiment, the transport device 100 comprises a first strain sensor 411 configured to measure the elongation of one point of the transport device at said point, and a tilt angle sensor 420 for measuring the tilt angle of the transport device, wherein the quantity of the load of the transport device can be calculated on the basis of the signals from the first strain sensor 411 and the tilt angle sensor 420.

It has been found that some strain sensors 411, 412, 413, 414 are temperature sensitive. In other words, the signal obtained from them will depend on the temperature in addition to the elongation. Typically, the operating temperature of a forest machine can vary, for example, in the range from -30 °C to +70 °C. It is thus obvious that particularly in forest machines, such as a forwarder, the signal of the strain sensor 411 is compensated for, taking into account the temperature. For this purpose, the transport device 100 comprises a compensating strain sensor 425 (Fig. 4) for compensating for the deviation caused by the operating temperature in the signal from the first strain sensor 411 or other strain sensor 412, 413, 414. For example, the compensating strain sensor 425 can be oriented in a direction where no elongations take place, as in Fig. 4. Thus, all the changes in the signal of the sensor 425 will be due to a change in the temperature. For example, the compensating strain sensor 425 can be oriented in a direction transverse to the measuring strain sensor, such as the first strain sensor 411. In addition, it is possible to use a temperature sensor, and to use the signal from the strain sensor 411 and the temperature to determine the load, for example, in the control unit 450.

In addition or as an alternative to the tilt angle sensor 420, the measurement of the load quantity can be made more accurate by using several strain sensors 411, 412, 413, 414. In particular, uneven loading caused by hilly terrain can be taken into account by providing strain sensors on both sides of the plane determined by the centre line CL in the longitudinal direction of the frame of the transport device 100 and by the normal ±Sz of the ground of the transport device. Furthermore, if the transport device is on a horizontal ground, said "plane determined by the centre line CL in the longitudinal direction of the frame of the transport device 100 and by the normal ±Sz of the ground of the transport device" is the vertical plane comprising the central line CL in the longitudinal direction of the frame of the transport device 100.

Consequently and with reference to Fig. 4, in an example, said first strain sensor 411 is provided on the first side of the plane determined by the centre line CL in the longitudinal direction of the frame of the transport device 100, such as the rear frame 210, and the normal of the ground of the transport device, and in or on the transverse axle 220. The transport device 100 further comprises a second strain sensor 412 which is placed at a point which
- is located on or in said transverse axle 220 of the transport device 100, on the second side of said plane, opposite to said first side,
- is fixed in relation to said frame 210 or is fastened to said frame 210 in a stationary manner, and
- is above or below the centre line of said transverse axle 220.

If the ground is horizontal, the above mentioned plane refers to the plane that comprises the longitudinal centre line CL and is vertical. If the ground is not horizontal, the above mentioned plane comprises the longitudinal centre line CL and is not vertical but tilted according to the normal of the ground.

Thus, the quantity of the load of the transport device can also be calculated on the basis of the signal from the second strain sensor 412. Further, it is possible to use at least the signal from the first strain sensor 411 and alternatively also the signals from the tilt angle sensor 420 and/or the compensating sensor 425. What has been said above about the angle α being above or below the centre line CT in connection with the first strain sensor 411 applies to the second strain sensor 412 as well. Advantageously, the second strain sensor 412 is below the centre line CT. What has been said above about the angle α being below the centre line CT in connection with the first strain sensor 411 applies to the second strain sensor 412 as well.

Further with reference to Fig. 4, the transport device 100 may comprise more than one, for example at least another transverse axle 220. Thus, the transport device 100 comprises a second transverse axle 225 transverse to said longitudinal direction Sx and a third strain sensor 413 arranged in or on said second transverse axle 225. It is obvious that the transport device 100 may comprise the "third" strain sensor 413 presented herein, even if the transport device 100 did not comprise the above mentioned "second" strain sensor 412. As shown in Fig. 4, the third strain sensor 413 is arranged at a point in the second transverse axle 225 which
- is fixed in relation to said frame 210 or is fastened to said frame 210 in a stationary manner, and
- is above or below the centre line CT2 of said second transverse axle 225.

What has been said above about the location of the sensor 411 in relation to the transverse axle 220 and its centre line CT in connection with Fig. 3 also applies to the location of the third sensor 413 in relation to the second transverse axle 225 and its centre line CT2. With reference to Fig. 3, considering that the sensors 411 and 413 can be placed in similar ways with respect to the axles 220 and 225 (respectively) and their central lines CT and CT2 (respectively), the third strain sensor 413 is not necessarily located directly above or below the centre line CT2 of the second transverse axle 225. Advantageously, the third strain sensor 413 is located, with respect to the central line CT2, in a direction r that forms an angle α smaller than 45 degrees with the normal ±Sz (upwards or downwards) of the ground of the transport device. Advantageously, this angle is smaller than 30 degrees, such as smaller than 15 degrees or smaller than 5 degrees. Thus, the elongation or compression can be easily measured. Preferably, the third strain sensor is below the centre line CT2. Thus, the third strain sensor 413 is not necessarily located directly below the centre line CT2. Advantageously, the third strain sensor 413 is located, with respect to the central line CT2, in a direction that forms an angle α smaller than 45 degrees with such a normal - Sz of the surface of the ground that extends towards the ground *(i.e.*, the vertically downward direction -Sz in the case of a horizontal ground). Advantageously, this angle is smaller than 30 degrees, such as smaller than 15 degrees or smaller than 5 degrees. In such a case, the elongation can be easily measured, the joint of the strain sensor can be made reliable, and the sensor can be made easy to maintain.

Further referring to Fig. 4, the transport device 100 may comprise a fourth strain sensor 414. In an embodiment, said third strain sensor 413 is arranged (i) in or on the second transverse axle 225 and (ii) on the first side of a plane determined by the centre line in the longitudinal direction of the frame 210 of the transport device and by the normal of the surface of the ground. The transport device 100 further comprises a fourth strain sensor 414 which is placed at a point which
- is located on or in said second transverse axle 225 of the transport device 100, on the second side of said plane, opposite to said first side,
- is fixed in relation to said frame 210 or is fastened to said frame 210 in a stationary manner, and
- is above or below the centre line CT2 of said second transverse axle 225.

If the ground is horizontal, the above mentioned plane refers to the plane that comprises the longitudinal centre line CL and is vertical. If the ground is not horizontal, the above mentioned plane comprises the longitudinal centre line CL and is not vertical but tilted according to the normal of the ground.

What has been said above about the angle α being above or below the centre line CT2 in connection with the third strain sensor 413 also applies to the fourth strain sensor 414. Preferably, the fourth strain sensor 414 is below the centre line CT2. What has been said above about the angle α being below the centre line CT in connection with the third strain sensor 413 also applies to the fourth strain sensor 414.

Advantageously, one of the strain sensors 411, 412, 413, 414 is configured to measure the elongation in a direction in which an elongation is typically formed. Thus, the measurement accuracy is higher than in solutions in which the strain sensor is oriented differently. With reference to Fig. 4, in an embodiment,
- at least one of said strain sensors 411, 412, 413, 414 is arranged in or on the (first or second) transverse axle 220, 225, and
- said strain sensor 411, 412, 413, 414 is configured to measure the elongation in a direction that forms an angle β smaller than 45 degrees, advantageously an angle β smaller than 30 degrees, and most advantageously an angle β smaller than 15 degrees with the longitudinal direction ±Sy of said transverse axle.

Preferably, said strain sensor 411, 412, 413, 414 is configured to measure the elongation in the longitudinal direction ±Sy of said transverse axle. Preferably, the strain sensor 411, 412, 413, 414 comprises a strain gauge. Strain gauges are inexpensive and reliable strain sensors. In particular, the strain sensors to be used in forest machine systems should be reliable. The signal given by a strain gauge is resistive; thus, for measuring the resistive signal, it is possible to input, for example, a known current through the strain gauge and to measure the voltage over the strain gauge; or to input a voltage over the strain gauge and to measure the current passing through the strain gauge. In the measurement, it is possible to utilize a bridge circuit, such as Wheatstone bridge circuit.

Typically, the strain gauge comprises a conductor forming a zigzag structure. The strain gauge is configured to measure the elongation in its longitudinal direction. Such a longitudinal direction refers to a direction in which a large part (*e.g.* at least 1/3) of said conductor extends, a large part (*e.g.* at least 1/3) of said conductor also extending in the opposite direction. In a typical strain gauge, relatively long stretches of said conductor run in the longitudinal direction and in the opposite direction in an alternating manner, and the conductor makes a turn between these stretches.

In an embodiment,
- at least one of said strain sensors 411, 412, 413, 414 is arranged in or on the (first or second) transverse axle 220, 225, and
- said strain sensor 411, 412, 413, 414 comprises a strain gauge having a longitudinal direction, in which the strain sensor is configured to measure the elongation, and
- said longitudinal direction of the strain gauge forms an angle β not greater than 45 degrees, advantageously an angle β smaller than 30 degrees and most advantageously an angle β smaller than 15 degrees, with the longitudinal direction ±Sy of said transverse axle

Preferably, said longitudinal direction of the strain gauge is parallel with the longitudinal direction of said transverse axle.

One sensor unit can comprise several strain sensors and thereby several strain gauges. For example, a first sensor unit can comprise a first strain sensor 411 and a compensating strain sensor 425 configured to compensate for the effect of temperature on the first strain sensor. For example, a second sensor unit can comprise a second strain sensor 412 and a compensating strain sensor 425 which is configured to compensate for the effect of temperature on the second strain sensor. In a corresponding way, such sensor units can be used as the third and fourth sensor units.

Typically, the transport device 100 comprises a cabin 116 arranged in the front part of the transport device 100 (Fig. 1). In a corresponding way, a load space 134 is provided in the rear part of the transport device 100. Thus, the load exerts stresses particularly on the rearmost transverse axle of the transport device, where the load quantity can be measured more easily than on the other transverse axles. With reference to Fig. 4, in an embodiment the transport device 100 comprises at least two transverse axles 225, 220 connected to the frame 210 of the transport device 100 and spaced from each other in the longitudinal direction ±Sx. Said first strain sensor 411 is arranged in or on the rearmost one 220 of the transverse axles 225, 220.

Particularly in an embodiment in which the transport device 100 is a forest machine or a trailer thereof, the strain sensor 100 is often subjected to moisture during use. To improve the long-term reliability of the sensor arrangement, at least one of the strain sensors 411, 412, 413, 414 is advantageously dust and moisture proof. Most advantageously, the strain sensor 411, 412, 413, 414 is dust and moisture proof according to class IP67. The sensor can also be more highly dust and moisture proof, for example according to class IP68. The content of the classification is presented in the standard IEC 60529, for example in its version 2.1 dated in 2001.

To secure maintainability, the strain sensor(s) is (are) replaceable. At least one of said strain sensors 411, 412, 413, 414 is fastened to its fixing point by at least one screw or bolt, whereby said strain sensor can be replaced by removing said screw, bolt, screws, or bolts. Possibly, the strain sensor is also fastened by glue, in which case tools may be needed for replacing the sensor, in addition to removing the bolts or screws.

Typically, the transport device 100, such as forwarder 100, comprises a wheel 114, 212. A crawler track can be provided on the wheel 114, 212. The wheel can be arranged in a bogie; for example, a rear wheel 212 can be arranged in a rear bogie 214. Thus, the wheel 114, 212 is movably connected, for example by bearings, to said transverse axle, directly or via the bogie. Advantageously, one of said strain sensors 411, 412, 413, 414 is left between said wheel 114, 212 and the centre line CL in the longitudinal direction of the frame 210 of the transport device 100. In a typical forwarder, the bogie is also equipped with bearings, that is, movably connected to the transverse axle. Thus, the bogie is not fastened in a stationary way as described above.

On the basis of a signal or response from the strain sensor 411, it is possible to determine the quantity of the load of the transport device. In the above described way, the measurement result can be made more accurate by using several strain sensors 412, 413, 414 and/or a tilt angle sensor 420, and/or by compensating for the effect of the temperature, for example using a compensating strain sensor 425 or a temperature sensor. The load quantity can be determined, for example, in a control unit 450. A transport device, such as a forwarder 100, comprises a control unit 450 configured to determine the quantity of the load of the transport device 100 on the basis of a signal or response from at least said first strain sensor 411. The control unit 450 can be configured to feed an input (such as voltage or current) to the first strain sensor 411 and to measure the response (such as current or voltage, respectively) of the first strain sensor 411 to said input.

To improve the measurement accuracy, in an embodiment, the control unit 450 is configured to determine the quantity of the load of the transport device 100 on the basis of a signal or response from a tilt angle sensor 420 as well.

To improve the measurement accuracy, in an embodiment, the control unit 450 is configured to determine the quantity of the load of the transport device 100 on the basis of a signal or response from at least another strain sensor as well.

Due to the variable use environment and the temperature sensitivity of the sensors, the control unit 450 is configured to compensate for a deviation caused by the operating temperature in the signal from the first strain sensor. Thus, the control unit is configured to receive a signal from means for compensating for the deviation caused by the operating temperature. In the above described way, such means may comprise a compensating strain sensor. In the above described way, such means may comprise a temperature sensor.

The measurement result, i.e. the calculated quantity of load in the transport device, may drift, *i.e.* change with respect to time, to some extent, even if the load quantity as such did not change. Correspondingly, the measured load quantity for an empty transport device can change in time, due to said drifting. In an embodiment, the control unit 450 is configured to tare the measurement result, *i.e.* to determine the tare weight, after unloading. Thus, the control unit 450 is configured to determine the tare (*i.e.* dead weight, *i.e.* the unloaded weight) of the transport device in a situation when the transport device is known to be empty. Thus, the quantity of the payload can be determined more accurately because the tare is known closely in time. In this way, the inaccuracy of measurement caused by said drifting is reduced.

The measured load quantity can be utilized in a number of ways; for example, the measured load quantity can be used for one or more of the following:
- (a) To warn the driver of an overload situation. Thus, the driver can be informed of a danger situation by, for example, sound, light, or a control display for the driver. An overload situation could damage the transport device or cause its sinking into the ground.
- (b) To display the quantity of the load of said transport device, such as forest machine or forwarder. Thus, the driver will known the load quantity. The load quantity can be stored in a memory or transmitted to further processing. In this way, information is obtained on not only said load quantity but also the cumulative quantity loaded in time, for example the quantity of timber material transported by a forwarder during a working day.
- (c) To limit the driving speed of said transport device, such as forest machine or forwarder, on the basis of the load quantity determined. Driving a loaded transport device at a high speed will, on one hand, unnecessarily load the transport device and, on the other hand, cause that the power produced is not sufficient for driving at the desired speed level. The control unit 450 can be connected to, for example, the transmission or the power production of the transport device so that the control unit 450 is configured to automatically limit the maximum speed on the basis of the load quantity.
- (d) To control the transmission of said transport device, such as forest machine or forwarder. For example, the control unit 450 can be connected to the transmission of the transport device so that the control unit 450 is configured to control the driving gear or the reduction gear on the basis of the load quantity. For example for a heavy load, a low gear or reduction gear can be applied. Correspondingly, a higher gear can be applied for a small load or when unloaded.
- (e) To determine the need for maintenance of said transport device, such as forest machine or forwarder. For example, the control unit 450 can be configured to store the load quantity and the speed of the transport device as a function of time. On the basis of this, it is possible to draw up conclusions about the stresses to which the transport device has been subjected during its operation history. Moreover, it is possible to draw up conclusions about the need for maintenance of the transport device. For example, the control unit 450 can be configured to determine the need for maintenance of said transport device, forest machine or forwarder on the basis of the measured load quantity and the measured driving speed. For example, the control unit 450 can be configured to transmit a signal for indicating the need for maintenance on the basis of the determined need for maintenance. The signal can be, for example, a sound or light signal aimed at the driver. The signal can be, for example, displayed on the display of the control unit 450 of the transport device, or it can be transmitted to a separate display.

In an embodiment, the control unit 450 of the transport device is configured to perform one or more of the above mentioned measures (a to e).

## Claims

1. A transport device (100) which is, unloaded and loaded, configured to travel in its longitudinal direction (+Sx) on the ground, the transport device (100) comprising
- a frame (110, 210) extending in said longitudinal direction (+Sx),
- a transverse axle (220) that is transverse to said longitudinal direction (+Sx), and
- a first strain sensor (411) provided in a location which is above or below the centre line (CT) of said transverse axle (220); wherein
- said first strain sensor (411) is fastened to its fixing point by at least one screw or bolt, wherein said strain sensor (411) can be replaced by removing said screw, bolt, screws, or bolts,
**characterized in that**
- the frame (110, 210) delimits a shielded space (211) extending in the longitudinal direction (+Sx) of the transport device (100) and said first strain sensor (411) is arranged in said shielded space (211),
- the first strain sensor (411) is provided in or on said transverse axle (220), in a location which is fixed in relation to said frame (110, 210) or is fastened to said frame (110, 210) in a stationary manner in such a way that no movable joint, such as an articulation or bearing, is left between the frame (110, 210) and the first strain sensor (411); whereby
- said first strain sensor (411) is configured to measure the elongation of said transverse axle (220) in said location, and the quantity of the load of the transport device (100) can be calculated on the basis of a signal or response from the first strain sensor (411) and **in that** the transport device (100) comprises
- a compensating strain sensor (425) in said shielded space (211) for compensating for a deviation caused by the operating temperature in the signal from the first strain sensor (411) and
- a control unit (450) that is configured to compensate for a deviation caused by the operating temperature in the signal from the first strain sensor (411).

2. A transport device (100) according to Claim 1, comprising
- a tilt angle sensor (420) for measuring the tilt angle of the transport device (200),
wherein the quantity of the load of the transport device (100) can further be calculated on the basis of a signal or response from the tilt angle sensor (420).

3. A transport device (100) according to the Claim 1 or 2, wherein
- said first strain sensor (411) is arranged on the first side of a plane determined by the central line (CL) in the longitudinal direction (+Sx) of the frame (110, 210) of the transport device (100) and by the normal of the ground of the transport device (100), the transport device (100) further comprising
- a second strain sensor (412) arranged in a location which
• is located on said transverse axle (220) of the transport device (100), on the second side of said plane, opposite to said first side,
• is fixed in relation to said frame (110, 210) or is fastened to said frame (110, 210) in a stationary manner, and
• is above or below the centre line (CT) of the transverse axle (220);
wherein said second strain sensor (412) is configured to measure the elongation of said transverse axle (220) in said location, and the quantity of the load of the transport device (100) can further be calculated on the basis of a signal or response from the second strain sensor (412).

4. A transport device (100) according to any of the Claims 1 to 3, wherein
- said first strain sensor (411) or said second strain sensor (412) is arranged in or on a transverse axle (220), below the central line (CT) of this transverse axle (220);
wherein said strain sensor (411, 412) is configured to measure the elongation.

5. A transport device (100) according to any of the Claims 1 to 4, wherein
- said first strain sensor (411) or said second strain sensor (412) is connected to an electrical wire (430) for transmitting a measurement signal to the control unit (450), and said electrical wire (430) extends in said shielded space (211).

6. The transport device (100) according to any of the Claims 1 to 5, which is a forest machine or a trailer of a forest machine; advantageously a forwarder.

7. A transport device (100) according to any of the Claims 1 to 5, or a forest machine or a trailer of a forest machine according to Claim 6, advantageously a forwarder, wherein
- the control unit (450) is configured to determine the load of the transport device (100) on the basis of a signal or response from at least said first strain sensor (411).

8. A transport device (100), a forest machine, a trailer of a forest machine, or a forwarder according to Claim 7, wherein
- the control unit (450) is configured to determine the load of the transport device (100) further on the basis of a signal or response from a tilt angle sensor (420).

9. A transport device (100), a forest machine, or a forwarder according to Claim 7 or 8, wherein the control unit (450) is configured
- to warn the driver of an overload situation, and/or
- to display the quantity of the load of said transport device (100), forest machine or forwarder, and/or
- to limit the driving speed of said transport device (100), forest machine or forwarder on the basis of the determined load quantity, and/or
- to control the transmission of said transport device (100), forest machine or forwarder, and/or
- to determine the need for maintenance of said transport device (100), forest machine or forwarder.

## Patentansprüche

1. Transportvorrichtung (100), die, unbeladen oder beladen, dazu ausgelegt ist, in ihrer Längsrichtung (+Sx) auf dem Boden zu fahren, wobei die Transportvorrichtung (100) Folgendes umfasst
- einen Rahmen (110, 210), der sich in der Längsrichtung (+Sx) erstreckt,
- eine Querachse (220), die quer zu der Längsrichtung (+Sx) ist, und
- einen ersten Dehnungssensor (411), bereitgestellt in einem Ort, der über oder unter der Mittellinie (CT) der Querachse (220) ist; wobei
- der erste Dehnungssensor (411) durch zumindest eine Schraube oder einen Bolzen an seinem Befestigungspunkt befestigt ist, wobei der Dehnungssensor (411) durch Entfernen der Schraube, des Bolzens, der Schrauben oder der Bolzen ersetzt werden kann,
**dadurch gekennzeichnet, dass**
- der Rahmen (110, 210) einen geschirmten Raum (211) begrenzt, der sich in der Längsrichtung (+Sx) der Transportvorrichtung (100) erstreckt, und dass der erste Dehnungssensor (411) in dem geschirmten Raum (211) angeordnet ist,
- der erste Dehnungssensor (411) in oder an der Querachse (220) in einem Ort bereitgestellt ist, der in Beziehung zu dem Rahmen (110, 210) fest ist, oder an dem Rahmen (110, 210) in einer stationären Weise befestigt ist, dahingehend, dass keine bewegbare Verbindung, wie etwa ein Gelenk oder ein Lager, zwischen dem Rahmen (110, 210) und dem ersten Dehnungssensor (411) bleibt; wobei
- der erste Dehnungssensor (411) dazu ausgelegt ist, die Dehnung der Querachse (220) in dem Ort zu messen, und dass die Quantität der Last der Transportvorrichtung (100) auf Grundlage eines Signals oder einer Antwort vom ersten Dehnungssensor (411) berechnet werden kann und dadurch, dass die Transportvorrichtung (100) Folgendes umfasst
- einen kompensierenden Dehnungssensor (425) in dem geschirmten Raum (211) zum Kompensieren einer durch die Betriebstemperatur verursachten Abweichung im Signal vom ersten Dehnungssensor (411) und
- eine Steuereinheit (450), die dazu ausgelegt ist, eine durch die Betriebstemperatur verursachte Abweichung im Signal vom ersten Dehnungssensor (411) zu kompensieren.

2. Transportvorrichtung (100) nach Anspruch 1, die Folgendes umfasst:
- einen Neigungswinkelsensor (420) zum Messen des Neigungswinkels der Transportvorrichtung (200),
wobei die Quantität der Last der Transportvorrichtung (100) ferner auf Grundlage eines Signals oder einer Antwort vom Neigungswinkelsensor (420) berechnet werden kann.

3. Transportvorrichtung (100) nach Anspruch 1 oder 2, wobei
- der erste Dehnungssensor (411) auf der ersten Seite einer durch die Mittellinie (CL) in der Längsrichtung (+Sx) des Rahmens (110, 210) der Transportvorrichtung (100) und durch die Normale des Bodens der Transportvorrichtung (100) bestimmten Ebene angeordnet ist, wobei die Transportvorrichtung (100) ferner Folgendes umfasst
- einen zweiten Dehnungssensor (412), angeordnet in einem Ort, der
• sich an der Querachse (220) der Transportvorrichtung (100) befindet, auf der zweiten Seite der Ebene gegenüber der ersten Seite,
• in Bezug auf den Rahmen (110, 210) fest ist oder an dem Rahmen (110, 210) in einer stationären Weise befestigt ist, und
• über oder unter der Mittellinie (CT) der Querachse (220) ist;
wobei der zweite Dehnungssensor (412) dazu ausgelegt ist, die Dehnung der Querachse (220) in dem Ort zu messen, und wobei die Quantität der Last der Transportvorrichtung (100) ferner auf Grundlage eines Signals oder einer Antwort vom ersten Dehnungssensor (412) berechnet werden kann.

4. Transportvorrichtung (100) nach einem der Ansprüche 1 bis 3, wobei
- der erste Dehnungssensor (411) oder der zweite Dehnungssensor (412) in oder an einer Querachse (220) angeordnet ist, unter der Mittellinie (CT) dieser Querachse (220);
wobei der Dehnungssensor (411, 412) dazu ausgelegt ist, die Dehnung zu messen.

5. Transportvorrichtung (100) nach einem der Ansprüche 1 bis 4, wobei
- der erste Dehnungssensor (411) oder der zweite Dehnungssensor (412) mit einem elektrischen Draht (430) zum Senden eines Messsignals an die Steuereinheit (450) verbunden ist und wobei sich der elektrische Draht (430) in dem geschirmten Raum (211) erstreckt.

6. Transportvorrichtung (100) nach einem der Ansprüche 1 bis 5, die eine Forstmaschine oder ein Anhänger einer Forstmaschine ist; vorteilhafterweise ein Tragrückeschlepper.

7. Transportvorrichtung (100) nach einem der Ansprüche 1 bis 5, oder eine Forstmaschine oder ein Anhänger einer Forstmaschine nach Anspruch 6, vorteilhafterweise ein Tragrückeschlepper, wobei
- die Steuereinheit (450) dazu ausgelegt ist, die Last der Transportvorrichtung (100) auf Grundlage eines Signals oder einer Antwort zumindest von dem ersten Dehnungssensor (411) zu bestimmen.

8. Transportvorrichtung (100), Forstmaschine, Anhänger einer Forstmaschine oder Tragrückeschlepper nach Anspruch 7, wobei
- die Steuereinheit (450) dazu ausgelegt ist, die Last der Transportvorrichtung (100) ferner auf Grundlage eines Signals oder einer Antwort von einem Neigungswinkelsensor (420) zu bestimmen.

9. Transportvorrichtung (100), Forstmaschine oder Tragrückeschlepper nach Anspruch 7 oder 8, wobei die Steuereinheit (450) dazu ausgelegt ist,
- den Fahrer vor einer Überlastsituation zu warnen und/oder
- die Quantität der Last der Transportvorrichtung (100), Forstmaschine oder des Tragrückeschleppers anzuzeigen und/oder
- die Fahrgeschwindigkeit der Transportvorrichtung (100), Forstmaschine oder des Tragrückeschleppers auf Grundlage der bestimmten Lastquantität zu begrenzen und/oder
- das Getriebe der Transportvorrichtung (100), Forstmaschine oder des Tragrückeschleppers zu steuern und/oder
- die Notwendigkeit einer Wartung der Transportvorrichtung (100), Forstmaschine oder des Tragrückeschleppers zu bestimmen.

## Revendications

1. Dispositif de transport (100) qui, déchargé et chargé, est configuré pour se déplacer dans sa direction longitudinale (+Sx) sur le sol, le dispositif de transport (100) comprenant
- un châssis (110, 210) s'étendant dans ladite direction longitudinale (+Sx),
- un essieu transversal (220) qui est transversal à ladite direction longitudinale (+Sx), et
- un premier capteur de déformation (411) placé à un endroit au-dessus ou en dessous de la ligne centrale (CT) dudit essieu transversal (220) ;
- ledit capteur de déformation (411) étant attaché à son point de fixation par au moins une vis ou boulon, ledit capteur de déformation (411) étant remplaçable par retrait desdits vis, boulon, vis ou boulons,
**caractérisé en ce que**
- le châssis (110, 210) délimite un espace abrité (211) s'étendant dans la direction longitudinale (+Sx) du dispositif de transport (100) et ledit premier capteur de déformation (411) est agencé dans ledit espace abrité (211),
- le premier capteur de déformation (411) est placé dans ou sur ledit essieu transversal (220), à un endroit fixe par rapport audit châssis (110, 210) ou est attaché audit châssis (110, 210) de manière immobile de façon à ce qu'aucune jointure mobile, telle qu'une articulation ou un palier, ne soit présente entre le châssis (110, 210) et le premier capteur de déformation (411) ; moyennant quoi
- ledit premier capteur de déformation (411) est configuré pour mesurer l'allongement dudit essieu transversal (220) audit endroit, et la quantité de charge du dispositif de transport (100) est calculable en fonction d'un signal ou d'une réponse provenant du premier capteur de déformation (411), et **en ce que** le dispositif de transport (100) comprend
- un capteur de déformation de compensation (425) dans ledit espace abrité (211), destiné à compenser un écart dû à la température de fonctionnement dans le signal provenant du premier capteur de déformation (411) et
- une unité de commande (450) configurée pour compenser un écart dû à la température de fonctionnement dans le signal provenant du premier capteur de déformation (411).

2. Dispositif de transport (100) selon la revendication 1, comprenant
- un capteur d'angle d'inclinaison (420) destiné à mesurer l'angle d'inclinaison du dispositif de transport (200),
la quantité de la charge du dispositif de transport (100) est en outre calculable en fonction d'un signal ou d'une réponse provenant du capteur d'angle d'inclinaison (420).

3. Dispositif de transport (100) selon la revendication 1 ou 2, dans lequel
- ledit premier capteur de déformation (411) est agencé du premier côté d'un plan déterminé par la ligne centrale (CL) dans la direction longitudinale (+Sx) du châssis (110, 210) du dispositif de transport (100) et par la normale du sol du dispositif de transport (100), le dispositif de transport (100) comprenant en outre
- un deuxième capteur de déformation (412) agencé à un endroit
• situé sur ledit essieu transversal (220) du dispositif de transport (100), du deuxième côté dudit plan opposé audit premier côté,
• fixe par rapport audit châssis (110, 210) ou attaché audit châssis (110, 210) de manière immobile, et
• au-dessus ou en dessous de la ligne centrale (CT) de l'essieu transversal (220) ;
ledit deuxième capteur de déformation (412) étant configuré pour mesurer l'allongement dudit essieu transversal (220) audit endroit, et la quantité de la charge du dispositif de transport (100) est en outre calculable en fonction d'un signal ou d'une réponse provenant du deuxième capteur de déformation (412).

4. Dispositif de transport (100) selon l'une quelconque des revendications 1 à 3, dans lequel
- ledit premier capteur de déformation (411) ou ledit deuxième capteur de déformation (412) est agencé dans ou sur un essieu transversal (220), en dessous de la ligne centrale (CT) de cet essieu transversal (220) ;
ledit capteur de déformation (411, 412) étant configuré pour mesurer l'allongement.

5. Dispositif de transport (100) selon l'une quelconque des revendications 1 à 4, dans lequel
- ledit premier capteur de déformation (411) ou ledit deuxième capteur de déformation (412) est relié à un fil électrique (430) destiné à transmettre un signal de mesure à l'unité de commande (450), et ledit fil électrique (430) s'étend dans ledit espace abrité (211).

6. Dispositif de transport (100) selon l'une quelconque des revendications 1 à 5, consistant en un engin forestier ou une remorque d'un engin forestier ; avantageusement un porteur.

7. Dispositif de transport (100) selon l'une quelconque des revendications 1 à 5, ou engin forestier ou remorque d'un engin forestier selon la revendication 6, avantageusement porteur, dans lequel ou laquelle
- l'unité de commande (450) est configurée pour déterminer la charge du dispositif de transport (100) en fonction d'un signal ou d'une réponse provenant au moins dudit premier capteur de déformation (411).

8. Dispositif de transport (100), engin forestier, remorque d'un engin forestier ou porteur selon la revendication 7, dans lequel ou laquelle
- l'unité de commande (450) est configurée pour déterminer la charge du dispositif de transport (100) en outre en fonction d'un signal ou d'une réponse provenant d'un capteur d'angle d'inclinaison (420).

9. Dispositif de transport (100), engin forestier, ou porteur selon la revendication 7 ou 8, dans lequel l'unité de commande (450) est configurée
- pour avertir le conducteur d'une situation de surcharge, et/ou
- pour afficher la quantité de la charge dudit dispositif de transport (100), engin forestier ou porteur, et/ou
- pour limiter la vitesse de roulage dudit dispositif de transport (100), engin forestier ou porteur en fonction de la quantité déterminée de la charge, et/ou
- pour commander la transmission dudit dispositif de transport (100), engin forestier ou porteur, et/ou
- pour déterminer la nécessité d'une révision dudit dispositif de transport (100), engin forestier ou porteur.
